# FASCICULE DE BREVET EUROPEEN

(11) **EP 1 498 841 B1**
(45) Date de publication et mention de la délivrance du brevet: **24.03.2010**
(21) Numéro de dépôt: 03015964.4
(22) Date de dépôt: 14.07.2003
(51) Int. Cl.: G06K 19/073, G07F 7/10

(54) **Circuit transpondeur multi-applications et procédé de gestion de la mémoire d'un tel circuit transpondeur**
Schaltkreis für einen Mehrzwecktransponder und Verfahren zur Speicherverwaltung desselben
Multi application transponder chip and memory managing method therefore

(43) Date de publication de la demande: 19.01.2005
(73) Titulaire: EM Microelectronic-Marin SA, 2074 Marin (CH)
(72) Inventeur: Kanan, Riad, 2074 Marin (CH)
(74) Mandataire: Ravenel, Thierry Gérard Louis

(56) Documents cités:
- EP-A- 1 113 387
- WO-A-02/35464
- US-A- 4 930 129
- US-A- 5 276 903
- US-A- 5 339 400
- US-A- 5 384 749

## Description

### DOMAINE TECHNIQUE

La présente invention concerne de manière générale le domaine des circuits transpondeurs pour système d'identification et/ou d'accès électronique sans contact. Plus particulièrement, la présente invention concerne un tel circuit transpondeur dit multi-applications adapté pour permettre la mémorisation de données relatives à une pluralité d'applications distinctes ainsi qu'un procédé de gestion de la mémoire d'un tel circuit transpondeur.

### ARRIÈRE-PLAN TECHNOLOGIQUE

On connaît déjà des circuits transpondeurs multi-applications pour système d'identification et/ou d'accès électronique sans contact. Les documents WO 97/34265 et WO 02/35464 décrivent par exemple des solutions où l'espace mémoire du circuit transpondeur est segmenté en une pluralité de segments mémoires pour accueillir chacun des données relatives à une application déterminée parmi une pluralité d'applications distinctes. Le document WO 97/34265 présente une solution où la segmentation de l'espace mémoire est opérée en fonction de la quantité de données devant être mémorisées, chaque segment mémoire présentant une longueur variable. Des en-têtes sont par ailleurs prévus pour identifier chacun des segments mémoires et leur attribution à l'application concernée. Le document WO 02/35464 présente une solution adoptant une organisation plus rigide de l'espace mémoire disponible sur le circuit transpondeur, une pluralité de segments mémoires étant prédéfinis pour accueillir chacun des données relatives à une application déterminée parmi une pluralité d'applications distinctes. Une solution similaire est décrite aussi dans le document US-A-527fi903 où une section de mémoire est prévue pour enregistrer l'adressage de la mémoire de manière à informer sur les divers segments mémoires prévus respectivement pour la pluralité d'applications. Par rapport à la solution décrite dans le document WO 97/34265, cette solution offre l'avantage de simplifier dans une très large mesure l'adressage des mots mémoires et les opérations de lecture et d'écriture en mémoire. Cette solution présente cependant l'inconvénient d'une structure mémoire peu évolutive et peu flexible.

Une contrainte des circuits transpondeurs pour système d'identification et/ou d'accès électronique sans contact réside dans les ressources relativement limitées qu'il est possible ou envisageable d'y incorporer. Il est en particulier désirable de proposer des solutions peu coûteuses à implémenter qui ne pèsent pas trop lourdement sur les coûts de fabrication du circuit transpondeur. Des mémoires de haute capacité ainsi que des systèmes de fichiers évolués, comme on peut notamment les rencontrer dans le domaine informatique, ne sont malheureusement pas adaptés pour une utilisation dans des circuits transpondeurs du type susmentionné, non seulement en raison de leurs coûts d'implémentation, mais également en raison de la puissance de calcul élevée requise pour opérer de telles solutions. Par ailleurs, dans le cas de circuits transpondeurs de type passif où l'énergie nécessaire pour alimenter ces circuits est directement dérivée d'un champ électromagnétique basse fréquence (typiquement 125 kHz) produit par le dispositif d'interrogation associé, la fréquence de travail peu élevée n'est pas propice à l'implémentation d'une architecture mémoire évoluée car celle-ci est trop gourmande en termes de temps de traitement.

Il est donc désirable de proposer un circuit transpondeur multi-applications dont l'architecture mémoire offre plus de flexibilité que les solutions antérieures présentant une organisation mémoire rigide à l'image de celle décrite dans le document WO 02/35464 tout en veillant à ne pas alourdir ou rendre trop complexe cette architecture mémoire. La présente invention vise à proposer une telle solution.

### EXPOSÉ DE L'INVENTION

La présente invention a ainsi pour premier objet un circuit transpondeur multi-applications dont les caractéristiques sont énoncées dans la revendication indépendante 1.

Des modes de réalisation avantageux de ce circuit transpondeur font l'objet des revendications dépendantes.

La présente invention a également pour objet un procédé de gestion de la mémoire d'un circuit transpondeur du type susmentionné dont les caractéristiques principales sont énoncées dans la revendication 8.

### BRÈVE DESCRIPTION DES DESSINS

D'autres caractéristiques et avantages de la présente invention apparaîtront plus clairement à la lecture de la description détaillée qui suit des modes de réalisation de l'invention donnés uniquement à titre d'exemples non limitatifs et illustrés par les dessins annexés où :
- la figure 1 montre un schéma bloc d'un circuit transpondeur de type passif constituant un mode de réalisation de l'invention ;
- la figure 2 illustre schématiquement l'organisation globale des moyens de mémorisation du circuit transpondeur de la figure 1 qui comprend une première zone mémoire segmentée et pré-établie, une deuxième zone mémoire dite partagée également segmentée en plusieurs mots mémoires et une troisième zone mémoire contenant des indications relatives à l'attribution, préférablement, des mots mémoires des première et deuxième zones mémoires ;
- la figure 3 illustre de manière plus détaillée l'organisation des moyens de mémorisation de la figure 2 selon un mode de réalisation de l'invention ;
- la figure 4 est une illustration détaillant plus en avant l'organisation des données de la troisième zone mémoire de la figure 3, cette troisième zone mémoire étant préférablement organisée sous la forme d'un table de correspondance entre les mots mémoires des première et deuxième zones mémoires et les diverses applications.

### MODES DE RÉALISATION DE L'INVENTION

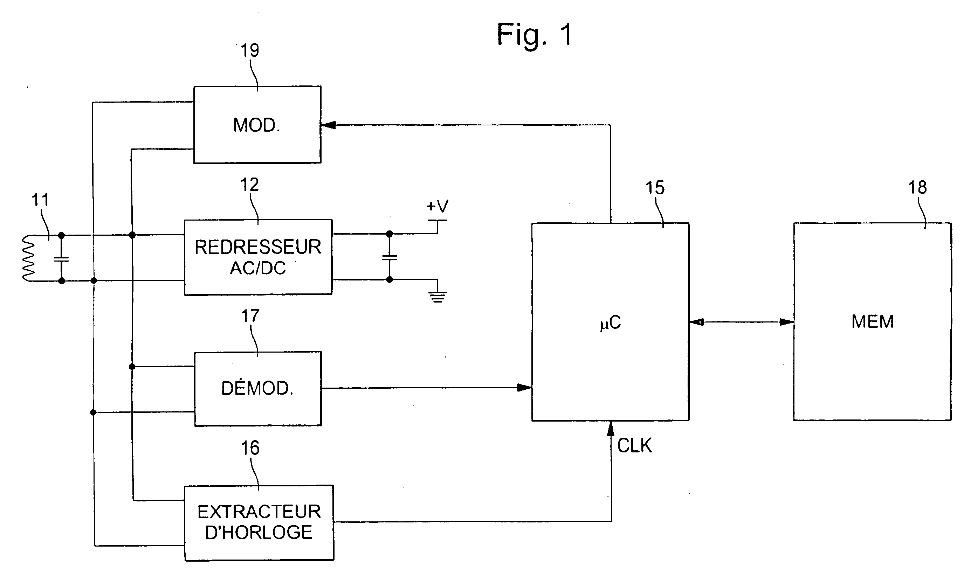

La figure 1 montre un schéma bloc d'un circuit transpondeur pour système d'identification et/ou d'accès électronique sans contact selon un mode de réalisation de l'invention. Ce transpondeur, typiquement agencé pour fonctionner à une fréquence de l'ordre de 125 kHz, est notamment agencé pour coopérer avec un dispositif d'interrogation externe non représenté par le biais d'une interface sans contact de type inductive. Le circuit transpondeur de la figure 1 est alimenté par le champ électromagnétique ambiant produit par le dispositif d'interrogation, champ qui induit une tension au borne d'une bobine 11 d'un circuit formant antenne. Cette tension est redressée par un bloc redresseur AC/DC 12 et fournit la tension d'alimentation +V nécessaire au fonctionnement du circuit transpondeur. Le transpondeur comprend en outre des moyens d'extraction d'horloge 16 permettant de dériver du champ électromagnétique un signal d'horloge (CLK) assurant le cadencement d'une logique de contrôle 15, et des moyens de démodulation 17 permettant d'extraire des données modulées sur le champ électromagnétique capté par l'antenne. Le circuit transpondeur comprend encore des moyens de mémorisation 18, constitués notamment et préférablement d'une mémoire reprogrammable (par ex. une EEPROM) et d'une mémoire morte (ROM). Enfin, des moyens d'encodage et de modulation 19 permettant de moduler et transmettre des informations stockées dans les moyens de mémorisation 18.

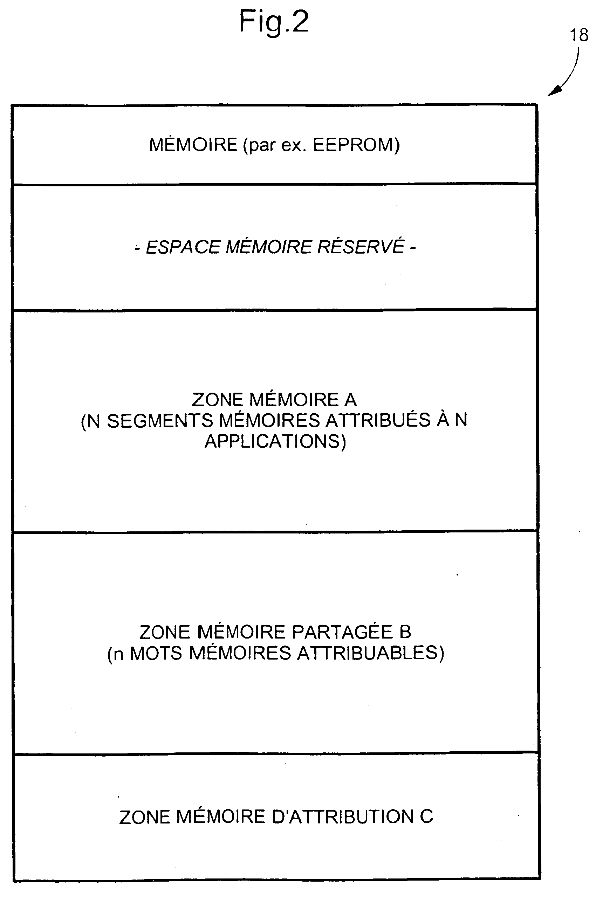

La figure 2 montre de manière schématique l'architecture et l'organisation des moyens de mémorisation 18 du circuit transpondeur illustré à la figure 1. Comme déjà mentionné, ces moyens de mémorisation 18 comprennent notamment une mémoire reprogrammable (avantageusement une EEPROM). La mémoire reprogrammable est organisée en une pluralité de mots mémoires de longueur déterminée. Les moyens de mémorisation 18 comprennent en outre, de manière non limitative, des mots supplémentaires (non représentés) programmés par laser dans une mémoire morte (ROM). Ces mots mémoires de ROM contiennent typiquement un numéro de série et un numéro d'identification qui sont uniques à chaque circuit transpondeur.

Une première partie de l'espace mémoire du circuit transpondeur (espace dit réservé dans la figure 2) est allouée pour la mémorisation de données autres que les données relatives aux diverses applications pour lesquelles le circuit transpondeur est configuré. Ces données peuvent notamment inclure des mots de passe ou de contrôle, ou encore des clés servant à un cryptage ou décryptage des données mémorisées. On ne décrira pas ici la structure particulière de cette première partie réservée de l'espace mémoire, celle-ci n'ayant pas de lien direct avec l'objet de l'invention revendiquée.

Une autre partie de l'espace mémoire du circuit transpondeur est à proprement parler allouée à la mémorisation des données relatives aux diverses applications pouvant parallèlement être stockées sur le circuit transpondeur. C'est cette seconde partie de l'espace mémoire et son organisation qui nous intéresse plus particulièrement.

Dans le cadre de la présente invention, cette partie de l'espace mémoire est subdivisée en trois zones mémoires spécifiques qui vont maintenant être détaillées. La première zone mémoire, repérée par la référence A, est ainsi segmentée en plusieurs mots mémoires dédiés chacun à la mémorisation de données relatives à une application déterminée parmi la pluralité d'applications distinctes pour lesquelles le circuit transpondeur peut être configuré. Plus spécifiquement, partant du principe que les moyens de mémorisation 18 du circuit transpondeur sont agencés pour permettre le stockage simultané de données relatives à N applications distinctes, la première zone mémoire A comprend autant de segments mémoire qu'il y a d'applications, c'est-à-dire N segments mémoires. Chacun de ces segments peut comporter un ou plusieurs mots mémoires.

La deuxième zone mémoire, repérée par la référence B, est elle-aussi segmentée en plusieurs mots mémoires. Toutefois, à la différence de la première zone mémoire A, les divers mots mémoires de la zone B peuvent être attribués à la mémorisation de données relatives à l'une quelconque des N applications susmentionnées. A ce titre, la deuxième zone mémoire est dite partagée car chacun des mots mémoires qui la composent peuvent être attribués à une quelconque application parmi la pluralité d'application pour lesquelles le circuit transpondeur est configuré.

La troisième zone mémoire, dite d'attribution, repérée par la référence C, ne permet pas à proprement parler le stockage de données relatives aux applications. Elle assure et identifie uniquement l'attribution des mots mémoires de la deuxième zone mémoire B au moins (préférablement des deux zones mémoires A et B), c'est-à-dire contient des indications permettant de déterminer lesquels des mots mémoires de la deuxième zone mémoire B au moins sont attribués à la mémorisation de données d'application et à quelles applications ces mots mémoires sont attribués.

La troisième zone mémoire C ne contient pas nécessairement des indications relatives à l'attribution des mots mémoires de la première zone mémoire A étant donné que chacun des mots mémoires de la première zone A est dédié à une application déterminée. Cependant, afin d'assurer et d'offrir une meilleure flexibilité d'utilisation, la troisième zone mémoire contient préférablement des données d'attribution pour chacune des zones mémoires A et B. Selon un mode de réalisation préféré, une première partie de la troisième zone mémoire C identifie l'attribution des mots mémoires de la première zone mémoire A et une seconde partie de la troisième zone mémoire identifie l'attribution des mots mémoires de la deuxième zone mémoire B.

Selon un mode de réalisation particulièrement avantageux de la présente invention, l'attribution des mots mémoires de la première zone mémoire est préétablie et mémorisé de la sorte dans la troisième zone mémoire C, par exemple lors de la fabrication ou de la configuration du circuit transpondeur. L'attribution des mots mémoires de la deuxième zone mémoire B est quant à elle variable en fonction des besoins de chaque application et est susceptible d'être mise à jour par un utilisateur par modification des indications mémorisées dans la troisième zone mémoire C.

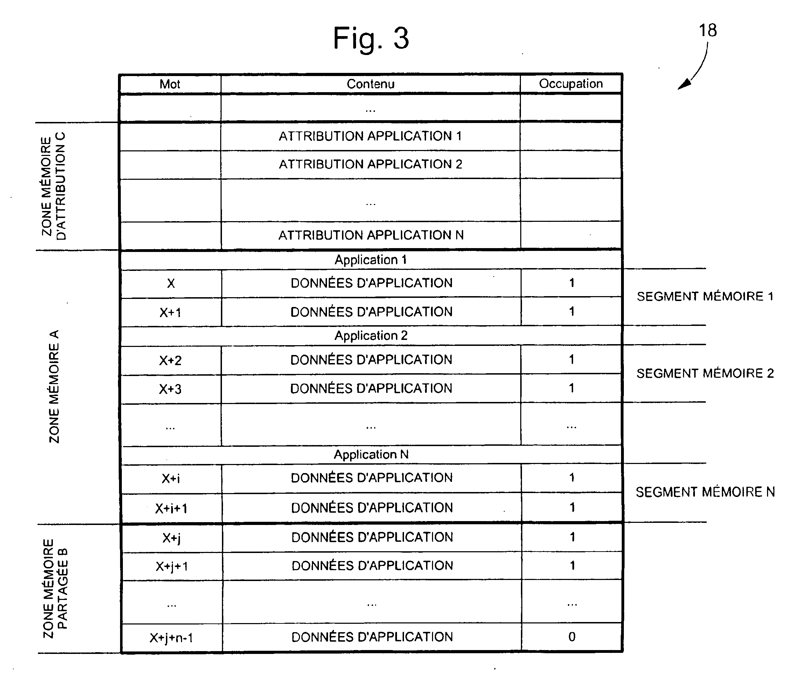

Il convient de noter que l'illustration de la figure 2 ne doit pas être considérée comme limitative, la subdivision dans les trois zones mémoires A à C susmentionnées étant purement fonctionnelle. Ainsi, l'ordre de succession de zones mémoires et leur distribution dans la figure 2 ne doivent pas être considérés comme limitatifs. La figure 3 discutée plus loin montre par exemple que la zone mémoire d'attribution C peut être déplacée en amont des zones mémoires A et B. Il convient enfin de mentionner que les zones mémoires A à C et les mots mémoires qui les composent ne sont pas nécessairement disposés de manière contiguë.

La figure 3 présente une illustration plus détaillé de l'organisation de zones mémoires A à C selon un mode de réalisation. A titre purement illustratif, les N segments mémoires composant la zone mémoire A comportent chacun un couple de mots mémoires désignés X et X+1 (segment mémoire 1), X+2 et X+3 (segment mémoire 2) à X+i et X+i+1 (segment mémoire N). La deuxième zone mémoire B se compose quant à elle de n mots mémoires désignés X+j à X+j+n-1.

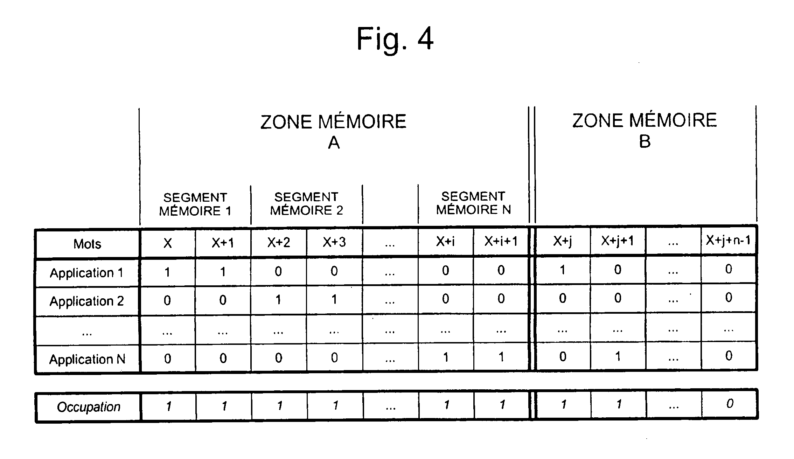

La zone mémoire d'attribution C se compose avantageusement dans cet exemple de N mots mémoires d'attribution (ci-après "mots d'attribution") identifiant l'attribution des divers mots mémoires des zones A et B pour chacune des N applications. La figure 4 présente une illustration d'une structure possible de la zone mémoire d'attribution C qui reprend cette subdivision en N mots d'attribution.

Comme on peut le voir dans la figure 4, la zone mémoire C est avantageusement organisée comme une table de correspondance comportant N lignes correspondant à chacune des N applications pour lesquelles le circuit transpondeur est configuré et comportant autant de colonnes qu'il y a de mots mémoires susceptibles d'être exploités dans les première et deuxième zones mémoires A et B, en l'occurrence les 2N+n mots mémoires X à X+i+1 et X+j à X+j+n-1. Dans l'exemple de la figure 4, la table de correspondance se compose donc de 2N+n colonnes et N lignes.

On comprendra que chacune des cellules de la table de la figure 4 représente l'attribution à l'une des N applications du mot mémoire correspondant. Chaque attribution est ici identifiée par un bit d'attribution dont la valeur "0" ou "1" indique respectivement, par convention, que le mot mémoire correspondant n'est pas attribué ou est attribué à l'application associée.

Comme déjà mentionné, l'attribution des mots mémoires de la première zone mémoire A est préférablement préétablie. Dans l'exemple de la figure 4, les mots mémoires des segments mémoires 1 à N de la zone A sont donc respectivement pré-attribués aux applications 1 à N comme schématisé par les valeurs à "1" des bits d'attribution concernés. Dans la mesure où l'une des applications nécessite plus d'espace mémoire, l'un ou plusieurs des mots mémoires X+j à X+j+n-1 disponibles dans la zone mémoire partagée B peuvent être attribués à cette application, auquel cas le ou les bits d'attribution concernés sont mis à "1". A titre d'exemple, la figure 4 montre que le mot mémoire X+j est attribué à l'application 1, alors que le mot mémoire X+j+1 est attribué à l'application N.

Un avantage de la structure illustrée dans la figure 4 réside dans le fait qu'il est très aisé de partager un ou plusieurs mots mémoires entre deux ou plusieurs applications. Il suffit en effet de passer à "1" tous les bits d'attribution du mot mémoire pour les applications concernées, auquel cas la colonne de la table de correspondance pour le mot mémoire considéré présentera plusieurs bits d'attribution à "1".

Outre les bits d'attribution susmentionnés, il est préférable d'indiquer l'état d'occupation ("utilisé" ou "vide") de chacun des mots mémoires des zones A et B par un bit d'occupation associé. Dans l'exemple de la figure 3, 2N+n bits sont nécessaires pour indiquer l'état d'occupation de tous les mots mémoires des zones A et B. A titre d'exemple, tous les bits d'occupation des mots mémoires de la première zone mémoire A sont à "1" indiquant ainsi que ces mots contiennent des données. Par contre, seuls les bits d'occupation associés aux mots X+j et X+j+1 qui sont respectivement attribués aux application 1 et N sont à "1", les bits d'occupation des autres mots mémoires de la zone partagée B étant tous à "0" indiquant ainsi qu'ils ne contiennent pas de données. A l'image de l'attribution des mots mémoires, les états d'occupation de tous les mots mémoires des zones A et B peuvent être identifiés par un mot d'occupation et être stockés sous cette forme dans la troisième zone mémoire C comme illustré par la ligne additionnelle dans le tableau de la figure 4.

L'utilisation conjointe des bits d'attribution et d'occupation permet d'assurer la gestion de l'espace mémoire alloué à la mémorisation des données d'application comme cela va maintenant être illustré par un certain nombre d'exemples.

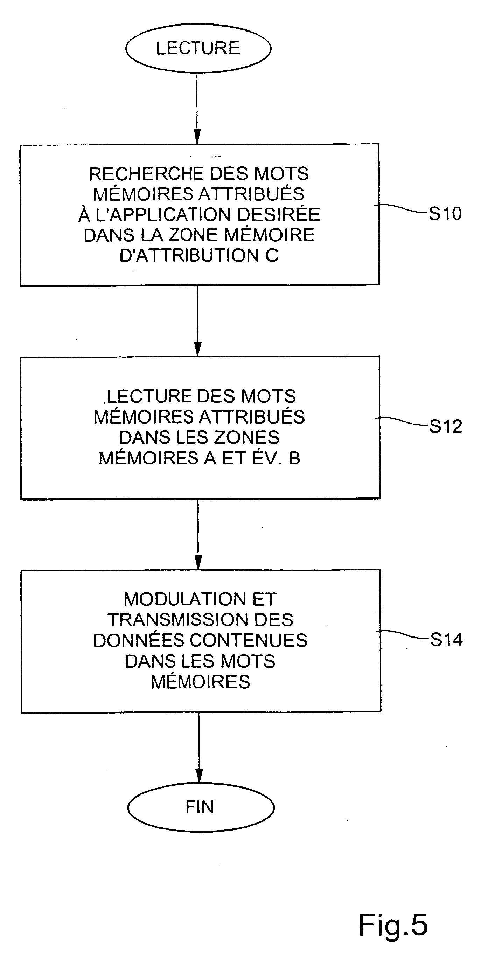

La figure 5 est un organigramme illustrant de manière schématique une opération de lecture de données relatives à une application. Cette opération fait typiquement suite à une requête de lecture transmise par le dispositif externe d'interrogation. Une première étape désignée S10 consiste tout d'abord à rechercher les mots mémoires attribués à l'application désirée dans la zone mémoire d'attribution C. En référence à la figure 4, cette étape consiste en une consultation du mot d'attribution associé à l'application désirée pour retrouver les mots mémoires attribués à cette application. A titre d'exemple, dans l'hypothèse où l'on désirerait lire les données relatives à l'application 1 dans la figure 4, cette première étape retourne l'attribution des trois mots mémoires X, X+1 et X+j.

La seconde étape du processus de lecture, désignée S12, consister à lire les mots mémoires attribués dans la zone mémoire A et, le cas échéant, dans la zone mémoire B. Dans l'exemple susmentionné consistant en une lecture des données relatives à l'application 1, cette seconde étape consiste ainsi en une lecture des mots mémoires X et X+1 dans la zone mémoire A et une lecture du mot mémoire additionnel X+j dans la zone mémoire partagée B. L'étape finale du processus de lecture, désignée S14, consiste en une modulation et une transmission des données contenues dans ces mots mémoires.

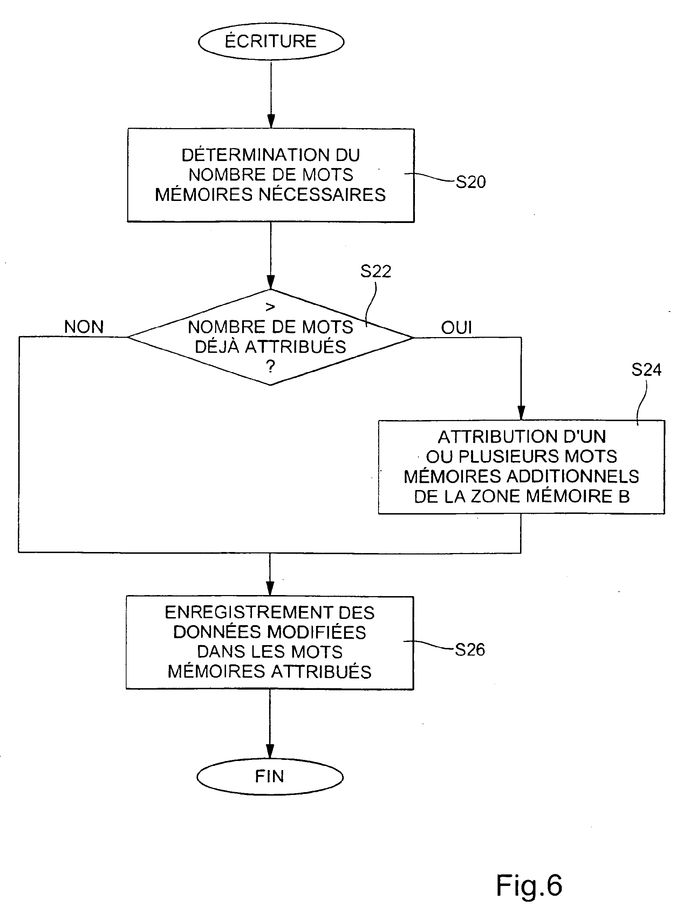

La figure 6 est un organigramme illustrant de manière schématique une opération d'enregistrement de données relatives à une application. Cette opération fait typiquement suite à la transmission par le dispositif externe d'interrogation de données modifiées relatives à l'application concernée. Après réception des données modifiées, la première étape du processus d'enregistrement, désignée S20 dans la figure 6, consiste en une détermination du nombre de mots mémoires nécessaires à la mémorisation des données modifiées. Cette étape S20 est suivie d'une vérification S22 visant à déterminer si l'espace mémoire déjà attribué à l'application présente une capacité suffisante pour permettre le stockage des données modifiées. Cette étape de vérification S22 consiste en une recherche des mots mémoires attribués à l'application désirée dans la zone mémoire d'attribution C (à l'image de l'étape S10 du processus de lecture illustré dans la figure 5) et d'une comparaison du nombre de mots déjà attribués avec le nombre de mots nécessaires à l'enregistrement des données modifiées.

Si la capacité est suffisante, il est procédé directement, à l'étape S26, à l'enregistrement des données modifiées dans les mots mémoires déjà attribués. Dans le cas contraire, il est préalablement procédé, à l'étape S24, à l'attribution, pour l'application concernée, d'un ou plusieurs mots mémoires additionnels de la zone mémoire B. Cette attribution suppose une vérification préalable de la disponibilité d'un ou plusieurs mots mémoires libres dans la zone mémoire partagée B (mots mémoires ayant un bit d'occupation associé à "0"). Cette détermination préalable du nombre de mots mémoires libres est préférablement entreprise avant que des données à mémoriser soient transmises au circuit transpondeur de sorte qu'il ne soit pas inutilement procédé à la transmission de données alors que la capacité de mémorisation est insuffisante. Cette détermination préalable peut simplement consister en une consultation des bits d'occupation des mots mémoires des zones A et B et en un décompte de tous les mots mémoires présentant un bit d'occupation à "0".

On comprendra que l'attribution d'un ou plusieurs mots mémoires additionnels a pour conséquence une modification dans la zone mémoire d'attribution C du ou des bits d'attribution correspondant à l'application et aux mots mémoires concernés. Ainsi, à titre d'exemple, l'attribution du mot mémoire additionnel X+j à l'application 1 dans les figures 3 et 4 passe par le passage du bit d'attribution correspondant à "1" dans la table de la figure 4. Dans le cas où des données sont enregistrées à l'étape S26 dans un mot mémoire nouvellement attribué à l'étape S24, on comprendra encore que le bit d'occupation correspondant à ce mot mémoire additionnel est également passé à "1".

Une opération d'effacement des données contenues dans un mot mémoire implique le passage du bit d'occupation correspondant à "0", que ce mot appartienne à la première ou la deuxième zone mémoire A ou B. Lors de l'effacement des données contenues dans un mot mémoire de la zone partagée B, le bit d'attribution correspondant, pour cette application, est également passé à "0". Concernant l'attribution des mots mémoires de la zone mémoire A, un changement d'attribution n'est préférablement effectué que si toutes les données relatives à l'application sont effacées. Ainsi, par exemple, dans la figure 4, si seules les données contenues dans le mot mémoire X+3 de la zone mémoire A sont effacées alors que des données sont toujours présentes dans l'autre mot mémoire X+2 du même segment mémoire, le bit d'attribution du mot X+3 à l'application 2 n'est pas modifié. C'est uniquement dans l'éventualité où toutes les données relatives à l'application concernée sont effacées que les bits d'attribution des mots mémoires associés sont passés à "0". Dès lors, ces mots mémoires sont libérés pour être attribués à une autre application ou une application déjà existante.

Préférablement, le changement d'attribution des mots mémoires de la zone mémoire A, voire l'effacement des données d'application mémorisées dans cette zone mémoire A, nécessite une autorisation, par exemple du propriétaire de l'application au moyen d'une clé propre à cette application ou grâce à une clé maîtresse ("master key") qui a le droit sur toutes les applications. En ce qui concerne la zone mémoire B, par contre, dès qu'un mot mémoire de cette zone est effacé, l'attribution de ce mot mémoire est elle-aussi effacée, ce mot mémoire pouvant alors à nouveau être attribué à une autre application.

Les opérations de lecture, d'écriture et d'effacement sont préférablement gérées par le circuit transpondeur lui-même de sorte que la gestion de l'espace mémoire soit "invisible" de l'extérieur. Il convient ainsi de concevoir la logique de commande du circuit transpondeur (15 dans la figure 1) de sorte qu'elle puisse exécuter un certain nombre de commandes préétablies. Une commande de lecture avec comme seul paramètre un numéro d'identification de l'application (1 à N) pourrait ainsi être définie, par ex. une commande de type "READ_APPLICATION *appl_nbr*" où le paramètre *appl*_*nbr* identifie l'application désirée. Sur réception d'un telle commande de lecture, le circuit transpondeur rechercherait ainsi lui-même les données mémorisées pour les transmettre au dispositif externe d'interrogation. De même une commande d'écriture de type "WRITE_APPLICATION *appl_nbr* ON x WORDS" pourrait être définie, cette commande identifiant uniquement l'application et le nombre de mots nécessaires à la mémorisation des données propres à cette application, à la charge ensuite au circuit transpondeur de gérer l'utilisation de l'espace mémoire pour effectuer cette opération. D'autres commandes de ce type pourraient être envisagées.

On comprendra que diverses modifications et/ou améliorations évidentes pour l'homme du métier peuvent être apportées aux modes de réalisation décrits dans la présente description sans sortir du cadre de l'invention défini par les revendications annexées. En particulier, la présente invention n'est pas limitée uniquement à une utilisation dans un circuit transpondeur de type passif comme illustré dans la figure 1.

## Revendications

1. Circuit transpondeur multi-application pour système d'identification et/ou d'accès électronique sans contact comprenant notamment une mémoire non volatile (18) présentant un espace mémoire programmable segmenté pour accueillir des données relatives à une pluralité d'applications distinctes, cet espace mémoire comprenant :
une première zone mémoire (A) segmentée en plusieurs mots mémoires dédiés chacun à la mémorisation de données relatives à une application déterminée parmi ladite pluralité d'applications distinctes ;
ce circuit transpondeur étant **caractérisé en ce qu'**il comprend en outre :
une deuxième zone mémoire (B), dite partagée, segmentée en plusieurs mots mémoires attribuables chacun à la mémorisation de données relatives à une quelconque application parmi ladite pluralité d'applications distinctes, l'attribution des mots mémoires de cette deuxième zone mémoire étant variable en fonction des besoins de chaque application ; et
une troisième zone mémoire (C) contenant des indications relatives à l'attribution des mots mémoires de ladite deuxième zone mémoire et permettant de déterminer au moins lequel ou lesquels des mots mémoires de ladite deuxième zone mémoire est/sont attribués à la mémorisation des données relatives à une application donnée parmi ladite pluralité d'applications distinctes.

2. Circuit transpondeur selon la revendication 1, **caractérisé en ce qu'**une première partie de ladite troisième zone mémoire (C) identifie l'attribution des mots mémoires de ladite première zone mémoire (A) et **en ce qu'**une seconde partie de ladite troisième zone mémoire (C) identifie l'attribution des mots mémoires de ladite deuxième zone mémoire (B).

3. Circuit transpondeur selon la revendication 2, **caractérisé en ce que** l'attribution des mots mémoires de ladite première zone mémoire (A) est préétablie et mémorisée dans ladite première partie de la troisième zone mémoire (C) et **en ce que** l'attribution des mots mémoires de la deuxième zone mémoire (B) est susceptible d'être mise à jour par modification des indications mémorisées dans ladite deuxième partie de la troisième zone mémoire (C).

4. Circuit transpondeur selon l'une quelconque des revendications précédentes, **caractérisé en ce que** l'attribution d'un mot mémoire à une application est déterminée par un unique bit dont l'état indique si le mot mémoire considéré est ou non attribué à l'application correspondante.

5. Circuit transpondeur selon la revendication 4, **caractérisé en ce que** ladite deuxième zone mémoire (B) comporte n mots mémoires attribuables chacun à la mémorisation de données relatives à une quelconque application parmi ladite pluralité d'application distinctes, et **en ce que** ladite troisième zone mémoire (C) est organisée de sorte qu'à chaque application correspond un mot d'attribution comprenant au moins n bits représentatifs chacun de l'attribution à l'application concernée desdits n mots mémoires de la deuxième zone mémoire (B).

6. Circuit transpondeur selon l'une quelconque des revendications précédentes, **caractérisé en ce qu'**au moins l'un desdits mots mémoires est partagé entre diverses applications.

7. Circuit transpondeur selon l'une quelconque des revendications précédentes, **caractérisé en ce qu'**à chaque mot mémoire desdites première et deuxième zones mémoires (A, B) est associé à un bit d'état représentatif de l'occupation ou de la non occupation du mot mémoire.

8. Procécé de gestion de la mémoire d'un circuit transpondeur selon l'une quelconque des revendications 1 à 7, comprenant :
a) lors d'une opération de lecture des données relatives à une application déterminée parmi ladite pluralité d'applications distinctes,
- une étape de recherche dans ladite troisième zone mémoire (C) du ou des mots mémoires de ladite deuxième zone mémoire (B) qui est/sont attribués à ladite application déterminée ; et
- une étape de lecture dans ladite première zone mémoire (A) et, le cas échéant, dans ladite deuxième zone mémoire (B) des mots mémoires attribués à ladite application déterminée,
b) lors d'une opération d'enregistrement de données modifiées relatives à une application déterminée parmi ladite pluralité d'applications distinctes :
- une étape de détermination du nombre de mots mémoires nécessaires à la mémorisation des données modifiées ; et
si le nombre de mots mémoires nécessaires à la mémorisation des données modifiées est inférieur ou égal au nombre de mots mémoires déjà attribués à ladite application déterminée :
- une étape d'enregistrement des données modifiées dans les mots mémoires déjà attribués ;
ce procédé étant **caractérisé en ce que**, dans le cas contraire, il comprend:
- une étape d'attribution d'un ou plusieurs mots mémoires de ladite deuxième zone mémoire (B) à l'application déterminée ;
- une étape de mise à jour des indications d'attribution mémorisées dans ladite troisième zone mémoire (C) ; et
- une étape d'enregistrement des données modifiées dans les mots mémoires attribués desdites première et deuxième zones mémoires (A, B).

9. Procédé selon la revendication 8, **caractérisé en ce qu'**il comporte, lors d'une opération d'effacement des données contenues dans un mot mémoire de ladite deuxième zone mémoire (B) qui est attribué à une application déterminée parmi ladite pluralité d'applications distinctes :
- une étape d'effacement, dans ladite troisième zone mémoire (C), des indications d'attribution relatives au dit mot mémoire de la deuxième zone mémoire (B) de sorte que ce mot mémoire puisse ultérieurement être attribué à une autre application parmi ladite pluralité d'applications distinctes.

10. Procédé selon la revendication 9, **caractérisé en ce que** les indications d'attribution relatives aux mots mémoires de la première zone mémoire (A) qui sont attribués à une application déterminée parmi ladite pluralité d'applications distinctes ne peuvent être effacées de ladite troisième zone mémoire (C) que lors d'une opération d'effacement de toutes les données relatives à ladite application déterminée.

11. Procédé selon la revendication 8, 9 ou 10, dans un circuit transpondeur selon la revendication 7, **caractérisé en ce qu'**il comporte en outre, lors d'une opération d'enregistrement de données dans un nouveau mot mémoire ou lors d'une opération d'effacement de toutes les données contenues dans un mot mémoire, une étape de mise à jour du bit d'état associé au mot mémoire concerné.

## Claims

1. Multi-application transponder circuit for a contactless electronic identification and/or access system including a non-volatile memory (18) having a segmented programmable memory space for receiving data relating to a plurality of distinct applications, this memory space including:
a first memory zone (A) segmented into several memory words each dedicated to storage of data relating to a determined application from among said plurality of distinct applications;
this transponder circuit being **characterised in that** it further comprises:
a second memory zone (B), called a shared zone, segmented into several memory words each able to be allocated to storage of data relating to any application from among said plurality of distinct applications, the allocation of said memory words of this second memory zone being variable as a function of the needs of each application; and
a third memory zone (C) containing indications relating to the allocation of memory words of said second memory zone and for determining at least which memory word or words of said second memory zone is/are allocated to storage of data relating to a given application from among said plurality of distinct applications.

2. Transponder circuit according to claim 1, **characterised in that** a first part of said third memory zone (C) identifies the allocation of memory words of said first memory zone (A) and **in that** a second part of said third memory zone (C) identifies the allocation of memory words of said second memory zone (B).

3. Transponder circuit according to claim 2, **characterised in that** the allocation of memory words of said first memory zone (A) is pre-established and stored in said first part of the third memory zone (C) and **in that** the allocation of memory words of the second memory zone (B) is capable of being updated by modifying the indications stored in said second part of the third memory zone (C).

4. Transponder circuit according to any of the preceding claims, **characterised in that** the allocation of a memory word to an application is determined by a single bit whose state indicates whether the memory word considered is or is not allocated to the corresponding application.

5. Transponder circuit according to claim 4, **characterised in that** said second memory zone (B) includes n memory words each able to be allocated to storage of data relating to any application among said plurality of distinct applications, and **in that** said third memory zone (C) is organised such that for each application there is a corresponding allocation word including at least n bits each representative of the allocation to the application concerned of said n memory words of the second memory zone (B).

6. Transponder circuit according to any of the preceding claims, **characterised in that** at least one of said memory words is shared between various applications.

7. Transponder circuit according to any of the preceding claims, **characterised in that** a state bit representative of the occupation or non-occupation of the memory word is associated with each memory word of said first and second memory zones (A and B).

8. Memory management method of a transponder circuit according to any of claims 1 to 7, including:
a) during a read operation of data relating to a determined application from among said plurality of distinct applications,
- a search step in said third memory zone (C) for the memory word(s) of said second memory zone (B) which is/are allocated to said determined application, and
- a step for reading in said first memory zone (A) and, possibly in said second memory zone (B) binary words allocated to said determined application.
b) during a modified data storage operation relating to a determined application from among said plurality of distinct applications,
- a step for determining the number of memory words necessary for storing the modified data: and
if the number of memory words necessary for storing the modified data is less than or equal to the number of memory words already allocated to said determined application:
- a step for storing modified data in the memory words already allocated; this method being **characterised in that**, in the opposite case, it comprises:
- a step for allocating one or several memory words of said second memory zone (B) to the determined application:
- a step for updating the allocation indications stored in said third memory zone (C): and
- a step for storing modified data in the allocated memory words of said first and second memory zones (A, B).

9. Method according to claim 8, **characterised in that** it includes, during an operation for erasing data contained in a memory word of said second memory zone (B), which is allocated to a determined application from among said plurality of distinct applications:
- an erasure step, in said third memory zone (C), of the allocation indications relating to said memory word of the second memory zone (B) such that this memory word can subsequently be allocated to another application from among said plurality of distinct applications.

10. Method according to claim 9, **characterised in that** the allocation indications relating to the memory words of said first memory zone (A), which are allocated to a determined application from among said plurality of distinct applications can only be erased from said third memory zone (C) during an operating for erasing all of the data relating to said determined application.

11. Method according to claim 8, 9 or 10, in a transponder circuit according to claim 7, **characterised in that** it further includes, during an operation for storing data in a new memory word or during an operation for erasing all of the data contained in a memory word, a step for updating the state bit associated with the memory word concerned.

## Patentansprüche

1. Multi-Applikations-Transponderschaltung für Identifikations- und/oder berührungsfreie, elektronische Zugangssysteme mit einem nicht flüchtigen Speicher (18), der programmierbaren Speicherplatz bereitstellt, welcher zur Aufnahme von Daten einer Vielzahl verschiedenartiger Anwendungen unterteilt ist, wobei der Speicherplatz:
eine erste Speicherzone (A), unterteilt in mehrere Speicherwörter aufweist, von denen jedes zur Speicherung von Daten einer bestimmten Anwendung der besagten Vielzahl von verschiedenen Anwendungen vorgesehen ist;
wobei die Transponderschaltung **dadurch gekennzeichnet ist, dass** sie unter anderem:
eine zweite Speicherzone (B) aufweist, die in eine Vielzahl zurückführbarer Speicherworte unterteilt ist, welche jeweils zur Speicherung von Daten einer beliebigen Anwendung der besagten Vielzahl verschiedener Anwendungen ausgebildet ist, wobei die Zuordnung der Speicherwörter der zweiten Speicherzone entsprechend den Anforderungen jeder Applikation variierbar ist; und
eine dritte Speicherzone (C) aufweist, welche Zeiger der Zuordnungen der Speicherwörter der besagten zweiten Speicherzone enthält und zumindest eine Zuordnung ermöglicht, welches oder welche Speicherwörter der besagten zweiten Speicherzone zur Speicherung von Daten einer Anwendung der besagten Vielzahl verschiedener Anwendungen vorgesehen ist oder sind.

2. Transponderschaltung nach Patentanspruch 1, **dadurch gekennzeichnet, dass** ein erster Teil der besagten dritten Speicherzone (C) eine Zuordnung der Speicherwörter der ersten Speicherzone (A) identifiziert und wobei ein zweiter Teil der besagten dritten Speicherzone (C) eine Zuordnung der Speicherwörter der besagten zweiten Speicherzone (A) identifiziert.

3. Transponderschaltung nach Anspruch 2, **dadurch gekennzeichnet, dass** die Zuordnung der Speicherwörter der besagten ersten Speicherzone (A) vorbestimmt ist und in besagtem ersten Teil der dritten Speicherzone (C) abgespeichert ist und wobei die Zuordnung der Speicherwörter der zweiten Speicherzone zur Aktualisierung mittels Modifikation der im besagten zweiten Teil der dritten Speicherzone (C) gespeicherten Zeiger geeignet ist.

4. Transponderschaltung nach einem beliebigen der vorhergehenden Ansprüche, **dadurch gekennzeichnet, dass** die Zuordnung eines Speicherworts zu einer Anwendung durch ein einziges Bit bestimmt ist, dessen Zustand anzeigt, ob das betrachtete Speicherwort der korrespondierenden Anwendung zugeordnet ist oder nicht.

5. Transponderschaltung nach Anspruch 4, **dadurch gekennzeichnet, dass** die besagte zweite Speicherzone (B) zuordenbare Speicherwörter enthält, die zur Speicherung der zu einer beliebigen Anwendung gehörenden Daten unter der Vielzahl verschiedener Anwendungen vorgesehen ist, und wobei die besagte dritte Speicherzone (C) derart eingerichtet ist, dass jede Anwendung mit einem Attributwort korrespondiert, welches zumindest n Bits aufweist, von denen jedes eine Zuordnung zur betroffenen Anmeldung der besagten n Speicherwörter der zweiten Speicherzone (B) darstellt.

6. Transponderschaltung nach einem beliebigen der vorhergehenden Ansprüche, **dadurch gekennzeichnet, dass** zumindest eines der Speicherwörter zwischen verschiedenen Anwendungen unterteilt ist.

7. Transponderschaltung nach einem beliebigen der vorhergehenden Ansprüche, **dadurch gekennzeichnet, dass** jedes Speicherwort der besagten ersten und zweiten Speicherzonen (A, B) mit einem Bit assoziiert ist, welches die Besetzung oder Nicht-Besetzung des Speicherworts repräsentiert.

8. Verfahren zum Betrieb des Speichers einer Transponderschaltung nach einem beliebigen der Patentansprüche 1 bis 7, umfassend:
a) während einer Leseoperation von Daten einer bestimmten Anwendung einer Vielzahl verschiedener Anwendungen,
- ein Suchschritt, in welchem die dritte Speicherzone (C) eines oder mehrerer Speicherwörter der besagten zweiten Speicherzone (B), die der bestimmten Anwendung zugeordnet ist/sind; und
- ein Leseschritt, in welchem die besagte erste Speicherzone (A) und, gegebenenfalls, in welchem die besagte zweite Speicherzone (B) der bestimmten Anwendung zugeordnete Speicherwörter,
b) während einer Speicheroperation der modifizierten Daten der bestimmten Anwendung unter der besagten Vielzahl verschiedener Anwendungen:
- ein Schritt zur Bestimmung der Anzahl der nötigen Speicherwörter zum Abspeichern der modifizierten Daten; und
falls die Anzahl der nötigen Speicherwörter zur Speicherung der modifizierten Daten kleiner oder gleich der Anzahl der Speicherwörter ist, welche der besagten bestimmten Anwendung bereits zugeordnet wurden:
- ein Schritt zum Speichern der modifizierten Daten in den bereits zugeordneten Speicherwörtern:
wobei das Verfahren **dadurch gekennzeichnet ist, dass** es im anderen Falle aufweist:
- einen Schritt zur Zuordnung eines oder mehrerer Speicherwörter der besagten zweiten Speicherzone (B) zur bestimmten Anwendung;
- einen Schritt zur Aktualisierung der Zuordnungszeiger, die in der besagten dritten Speicherzone (C) abgespeichert sind und
- einen Schritt zur Speicherung der modifizierten Daten in den den ersten und zweiten Speicherzonen (A, B) zugeordneten Speicherwörtern.

9. Verfahren nach Anspruch 8, **dadurch gekennzeichnet, dass** während einer Löschoperation der in einem Speicherwort der besagten zweiten Speicherzone (B) enthaltenen Daten, die einer bestimmten Anwendung unter der Vielzahl verschiedener Anwendungen zugeordnet sind:
- ein Schritt des Löschens enthalten ist, derart, dass die besagte dritte Speicherzone (C) des Zeigerattributs des Speicherworts der zweiten Speicherzone (B) anschließend einer anderen Anwendung der besagten Vielzahl unterschiedlicher Anwendungen zugeordnet werden kann.

10. Verfahren nach Anspruch 9, **dadurch gekennzeichnet, dass** die Attributzeiger der Speicherwörter der ersten Speicherzone (A), die einer bestimmten Anwendung der Vielzahl der verschiedenen Anwendungen zugeordnet ist, nicht durch die besagte dritte Speicherzone während einer Löschoperation sämtlicher Daten dieser bestimmten Anwendung gelöscht werden können.

11. Verfahren nach Anspruch 8, 9 oder 10, in einer Transponderschaltung nach Anspruch 7, **dadurch gekennzeichnet, dass** es unter anderem aufweist, dass während einer Speicheroperation der Daten in einem neuen Speicherwort oder während einer Löschoperation sämtlicher Daten eines Speicherworts ein Schritt der Aktualisierung des Zustands Bits des betreffenden Speicherworts erfolgt.
